# EUROPÄISCHE PATENTSCHRIFT

(11) **EP 0 690 251 B1**
(45) Veröffentlichungstag und Bekanntmachung des Hinweises auf die Patenterteilung: **19.04.2000**
(21) Anmeldenummer: 95200431.5
(22) Anmeldetag: 21.02.1995
(51) Int. Cl.: F16J 15/12

(54) **Partiell vorgepresste Weichstoffdichtungen**
Partially prepressed soft material gasket
Joint partiellement pré-pressé en matériau souple

(30) Priorität: 02.07.1994 DE 9410681 U
(43) Veröffentlichungstag der Anmeldung: 03.01.1996
(73) Patentinhaber: A.W. Schultze GmbH, D-22885 Barsbüttel (DE)
(72) Erfinder: Lorenz, Maik, D 22399 Hamburg (DE)
(74) Vertreter: Siewers, Gescha, Dr.

(56) Entgegenhaltungen:
- DE-A- 3 702 452
- DE-U- 9 212 104
- US-A- 4 676 515

## Beschreibung

Die Neuerung betrifft partiell vorgepreßte Weichstoffdichtungen.

Unter Weichstoffdichtungen werden Dichtungen verstanden, deren Dichtungsmassen entweder aus bestimmten Elastomeren z.B. PTFE oder PTFE Compounds, gegebenenfalls unter Faserzusatz, oder aus Graphit bestehen. Graphitdichtungen werden wegen der chemischen Inertheit des Materials überwiegend im Chemieapparatebau für Dichtungen und für Berstscheiben aber auch bei Wärmetauscheranlagen und in ähnlich belasteter Umgebung eingesetzt. Flachdichtungen auf Basis fasergefüllter Elastomere haben ebenfalls einen weiten Einsatzbereich, da sie für sehr hohe Flächenpressungswerte ausgelegt werden können, thermisch bis etwa 150° C belastbar sind und, je nach Art der Elastomeren, sich auch relativ beständig gegen chemische Einflüsse darstellen. In der Regel werden Weichstoffdichtungen zur besseren Handhabbarkeit auf einen Metallblechträger aufgebracht.

Das Gebrauchsmuster DE-U-92 12 104 beschreibt bereits vorgepreßte Graphitdichtungen, bei denen die Graphitschichten beidseitig auf einen Metallblechträger aufgebracht sind und die so vorverpreßt werden, daß die Dichtfläche einen sinuswellenförmigen Querschnitt erhält. Diese Dichtungen sind hochgradig flüssigkeits- und gasdicht. Sie weisen allerdings im Einsatz einige Nachteile auf, denn es hat sich herausgestellt, daß die Oberflächen aus Graphit bei hoher thermischer Belastung einen relativ schnellen Abbrand zeigen. Außerdem sind derartige Graphitdichtungen nicht bruchsicher und die Oberfläche ist bei Lagerung und Einbau empfindlich gegen Beschädigungen. Sowohl bei Graphit- als auch bei Elastomerendichtungen hat sich außerdem herausgestellt, daß solche Dichtungen bei der Demontage von Verbindungen schwer ablösbar sind und einen gewissen Verklebungseffekt zeigen.

Aus der US-A-4,676,715 ist eine Dichtung beschrieben, die aus einer Weichstoffschicht besteht, die beidseitig mit einer Metallabdeckung versehen ist, wobei hier ebenfalls eine Vorverpressung zu einem sinuswellenförmigen Rillenprofil erfolgt. Derartige Dichtungen sind aber nur bis zu einem mittleren Druckbereich einsetzbar, da die Weichstoffschicht im Inneren relativ stark zusammengepreßt wird und daher beim Einsatz relativ schnell eine Nivellierung der beidseitigen Metallabdeckungen erfolgt und damit die Gefahr eines Druckverlustes besteht.

Aufgabe der vorliegenden Erfindung ist es daher, Weichstoffdichtungen zu entwickeln, die bei hoher thermischer und Druckbelastung einsetzbar sind, die einen möglichst geringen Abbrand des Weichstoffes bei thermischer Belastung zeigen und die bei der Demontage von Verbindungen gut ablösbar sind.

Erfindungsgemäß werden nunmehr Weichstoffdichtungen mit beidseitig auf einem Metallträger aufgebrachten Weichstoffschichten vorgeschlagen, die insgesamt zu einem sinuswellenförmigen Rillenprofil vorverpreßt und dadurch gekennzeichnet sind, daß die äußeren Weichstoffoberflächen mit dünnen Metallblechen abgedeckt und die Weichstoffschichten auf jeder Seite des Metallträgers mehrschichtig sind, wobei die einzelnen Schichten durch Trennschichten aus anderen Materialien voneinander getrennt sind.

Überraschenderweise hat sich herausgestellt, daß Dichtleistungen und Lebensdauer von Weichstoffdichtungen erhöht werden können, wenn der Metallblechträger mit mehrschichtigen Weichstoffschichten auf jeder Seite des Trägers versehen ist, wobei diese Schichten durch Trennschichten aus anderen Materialien voneinander getrennt sind und die äußeren Weichstoffoberflächen mit dünnen Metallblechen abgedeckt werden. Diese Pakete aus Träger, mehreren Weichstoffschichten und den äußeren Metallabdeckungen werden dann zu einem sinuswellenförmigen Rillenprofil vorverpreßt, wobei entweder die beiden Oberseiten so ausgestaltet werden können, daß sich auf jeder Seite jeweils die Wellenberge oder Wellentäler gegenüberliegen oder daß dem Wellenberg auf einer Oberseite ein Wellental auf der anderen Oberseite oder umgekehrt gegenüberliegen.

Der Metallblechträger und die äußeren Deckbleche bestehen vorzugsweise aus Edelstahl, Weicheisen, Kupfer, Aluminium und/oder Titan. Diese Materialien können auch dann eingesetzt werden, wenn der Innen- oder der Außenrand der Dichtung oder beide mit einer Metallbördelung versehen werden sollen.

Die Metallblechauflagen an den Oberflächen schützen die Dichtungen bei der Lagerung und beim Einbau gegen Beschädigungen und, soweit Graphit betroffen ist, gegen Bruchgefahr. Durch die Abdeckung des Oberflächenmaterials wird dieses thermisch beständiger, insbesondere in aggressiver oder korrosiver Umgebung. Graphitdichtungen mit einer Metallabdeckung der beiden Oberflächen sind deutlich weniger abbrandgefährdet und weisen daher eine erheblich verlängerte Lebensdauer auf. Ein weiterer Vorteil der erfindungsgemäßen Dichtungen besteht in der verbesserten Ablösbarkeit der Dichtung bei Demontage der Dichtverbindungen. Während ungeschützte Oberflächen zum Verkleben mit der jeweiligen Anpressfläche neigen, tritt dieser Mangel bei einer mit Metallblech abgedeckten Oberfläche nicht auf. Dadurch kann die Dichtung schnell und sicher in einem Stück ohne Rückstände von den Dichtflächen gelöst werden. Auf diese Weise können die Montagezeiten verkürzt werden, da die Dichtflächen vor dem Einsetzen einer neuen Dichtung nicht erst aufwendig von den Resten der alten Dichtung gereinigt werden müssen.

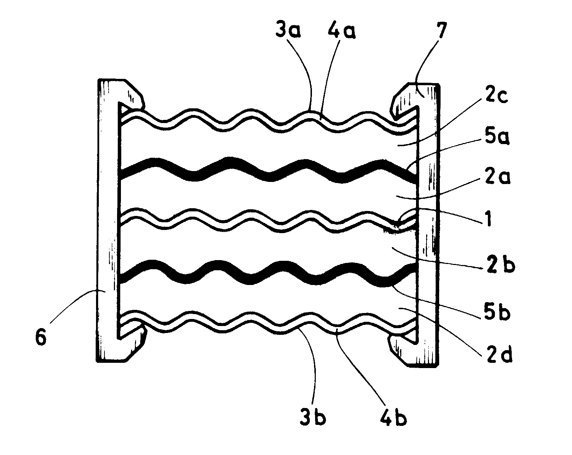

Im folgenden wird die Erfindung anhand der Zeichnung näher erläutert:

Die Zeichnung zeigt einen Querschnitt durch eine neuerungsgemäße mehrschichtige Graphitdichtung. Der Metallblechträger 1 ist auf seiner Ober- und Unterseite jeweils mit einer Graphitschicht 2a bzw. 2b bedeckt, die bei Glattblechen verklebt wird, während dies bei Spießblechen nicht notwendig ist. Auf diese ersten Graphitschichten wird eine Einlage 5a, 5b aufgebracht, die entweder wiederum aus Metallblech, oder auch aus fasergefüllten Elastomeren bestehen kann. Darauf werden erneut beidseitig Graphitschichten 2c und 2d aufgebracht, die dann letztlich mit einer Stahlblechabdeckung 4a, 4b versehen werden. Anschließend wird die gesamt Sandwich-Struktur der Dichtung vorverpreßt, so daß ein etwa sinuswellenförmiger Querschnitt der Dichtung entsteht. Diese Vorverpressung geschieht so, daß sich auf den gegenüberliegenden Seiten der Dichtung jeweils ein Wellenberg und ein Wellental gegenüber stehen. Falls erwünscht, kann die Dichtung an ihrer Außenkante und/oder Innenkante mit einer Metallbördelung 6, 7 versehen sein. Diese Metallbördelungen werden bevorzugt aus Edelstahl-, Weicheisen, Kupfer-, Aluminium- oder Titanblechen hergestellt.

## Patentansprüche

1. Weichstoffdichtung mit beidseitig auf einem Metallträger (1) aufgebrachten Weichstoffschichten (2a, 2b, 2c, 2d), die insgesamt zu einem sinuswellenförmigen Rillenprofil vorverpreßt sind, dadurch gekennzeichnet, daß die äußeren Weichstoffoberflächen mit dünnen Metallblechen (4a, 4b) abgedeckt und die Weichstoffschichten auf jeder Seite des Metallträgers (1) mehrschichtig sind, wobei die einzelnen Schichten durch Trennschichten (5a,5b) aus anderen Materialien (5a, 5b) voneinander getrennt sind.

2. Weichstoffdichtung nach Anspruch 1, dadurch gekennzeichnet, daß die Trennschichten (5a, 5b) aus Metallblech bestehen.

3. Weichstoffdichtung nach Anspruch 1, dadurch gekennzeichnet, daß die Trennschichten (5a, 5b) aus fasergefüllten Elastomeren bestehen.

4. Weichstoffdichtung nach einem der Ansprüche 1 bis 3, dadurch gekennzeichnet, daß die Weichstoffschichten (2a, 2b, 2c, 2d) aus Graphit bestehen.

5. Weichstoffdichtung nach Anspruch 1 bis 4, dadurch gekennzeichnet, daß die äußeren Abdeckbleche (4a, 4b) aus Edelstahl, Weicheisen, Kupfer, Aluminium und/oder Titan bestehen.

6. Weichstoffdichtung nach Anspruch 1 bis 5, dadurch gekennzeichnet, daß der Metallblechträger (1) und die äußeren Abdeckbleche (4a, 4b) aus Edelstahl, Weicheisen, Kupfer, Aluminium und/oder Titan bestehen.

7. Weichstoffdichtung nach Anspruch 1 bis 6, dadurch gekennzeichnet, daß der Innen- und/oder der Außenrand der Dichtung mit einer Metallbördelung (6, 7) versehen ist.

8. Weichstoffdichtung nach Anspruch 7, dadurch gekennzeichnet, daß die Bördelung (6, 7) aus Edelstahl, Weicheisen, Kupfer, Aluminium und/oder Titan besteht.

## Claims

1. A soft-material seal having soft-material layers (2a, 2b, 2c, 2d) applied to both sides of a metallic base (1) and pre-pressed as a whole to form a sinusoidal corrugated profile, **characterized in that** the outer soft-material sufaces are covered with thin metal sheets (4a, 4b) and the soft-material layers on each side of the metallic base (1) are multiple-layered, wherein the individual layers are separated from one another by separating layers (5a, 5b) of different materials (5a, 5b).

2. A soft-material seal according to Claim 1, **characterized in that** the separating layers (5a, 5b) consist of metal sheet.

3. A soft-material seal according to Claim 1, **characterized in that** the separating layers (5a, 5b) consist of fibre-filled elastomers.

4. A soft-material seal according to one of Claims 1 to 3, **characterized in that** the soft-material layers (2a, 2b, 2c, 2d) consist of graphite.

5. A soft-material seal according to Claims 1 to 4, **characterized in that** the outer covering metal sheets (4a, 4b) consist of special steel, soft iron, copper, aluminium and/or titanium.

6. A soft-material seal according to Claims 1 to 5, **characterized in that** the metal-sheet base (1) and the outer covering metal sheets (4a, 4b) consist of special steel, soft iron, copper, aluminium and/or titanium.

7. A soft-material seal according to Claims 1 to 6, **characterized in that** the inner and/or outer edge of the seal is provided with a metallic flanging-over (6, 7).

8. A soft-material seal according to Claim 7, **characterized in that** the flanging-over (6, 7) consists of special steel, soft iron, copper, aluminium and/or titanium.

## Revendications

1. Joint à base de matériau souple comprenant des couches de matériau souple (2a, 2b, 2c, 2d) appliquées sur un support en métal (1), qui sont façonnées à la presse en un profil rainuré sinusoïdal, caractérisé par le fait que les surfaces extérieures du matériau souple sont recouvertes de fines feuilles métalliques (4a, 4b) et que les couches de matériau souple sur chacune des faces du support en métal (1) sont multicouches, les différentes couches étant séparées les unes des autres par des couches de séparation (5a, 5b) en d'autres matériaux (5a, 5b).

2. Joint à base de matériau souple selon la revendication 1, caractérisé par le fait que les couches de séparation (5a, 5b) sont formées d'une feuille de métal.

3. Joint à base de matériau souple selon la revendication 1, caractérisé par le fait que les couches de séparation (5a, 5b) sont formées d'élastomères renforcés par fibres.

4. Joint à base de matériau souple selon une des revendications 1 à 3, caractérisé par le fait que les couches de matériau souple (2a, 2b, 2c, 2d) sont formées de graphite.

5. Joint à base de matériau souple selon une des revendications 1 à 4, caractérisé par le fait que les feuilles de couverture extérieures (4a, 4b) sont en acier allié, en fer doux, en cuivre, en aluminium et/ou en titane.

6. Joint à base de matériau souple selon une des revendications 1 à 5, caractérisé par le fait que le support en métal (1) et les feuilles de couverture extérieures (4a, 4b) sont en acier allié, en fer doux, en cuivre, en aluminium et/ou en titane.

7. Joint à base de matériau souple selon une des revendications 1 à 6, caractérisé par le fait que le bord intérieur et/ou le bord extérieur du joint est pourvu d'un ourlet métallique (6, 7).

8. Joint à base de matériau souple selon la revendication 7, caractérisé par le fait que l'ourlet (6, 7) est en acier allié, en fer doux, en cuivre, en aluminium et/ou en titane.
